(19) Europäisches Patentamt / European Patent Office / Office européen des brevets

(11) **EP 3 974 098 A1**

(12) **EUROPEAN PATENT APPLICATION**
published in accordance with Art. 153(4) EPC

(43) Date of publication:
**30.03.2022 Bulletin 2022/13**

(21) Application number: **20834267.5**

(22) Date of filing: **24.06.2020**

(51) International Patent Classification (IPC):
**B23K 35/368** (2006.01)　　**B23K 9/16** (2006.01)
**B23K 9/23** (2006.01)　　**B23K 35/30** (2006.01)
**C22C 38/00** (2006.01)　　**C22C 38/04** (2006.01)

(52) Cooperative Patent Classification (CPC):
**B23K 9/16; B23K 9/23; B23K 35/30; B23K 35/368;**
C22C 38/00; C22C 38/04

(86) International application number:
**PCT/JP2020/024814**

(87) International publication number:
**WO 2021/002259 (07.01.2021 Gazette 2021/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2019　JP 2019123039**
**16.01.2020　JP 2020005418**

(71) Applicant: **KABUSHIKI KAISHA KOBE SEIKO SHO
(KOBE STEEL, LTD.)
Hyogo 651-8585 (JP)**

(72) Inventors:
• **NAKO Hidenori
  Kobe-shi, Hyogo 651-2271 (JP)**
• **ISHIZAKI Keito
  Fujisawa-shi, Kanagawa 251-8551 (JP)**
• **KAWATA Junichi
  Fujisawa-shi, Kanagawa 251-8551 (JP)**
• **KINOSHITA Yuta
  Fujisawa-shi, Kanagawa 251-8551 (JP)**

(74) Representative: **Müller-Boré & Partner
Patentanwälte PartG mbB
Friedenheimer Brücke 21
80639 München (DE)**

(54) **AUSTENITIC STAINLESS STEEL FLUX CORED WIRE, WELDED METAL, AND WELDING METHOD**

(57)　Provided are: an austenitic stainless steel flux cored wire from which a welded metal having excellent cryogenic temperature toughness can be produced; a welded metal having excellent cryogenic temperature toughness; and a welding method. An austenitic stainless steel flux cored wire in which a flux is filled in a steel-made shell, wherein the flux cored wire contains Si, Mn, Ni, Cr, C, P and N in amounts each falling within a specified range relative to the entire mass of the wire, with the remainder made up by Fe and unavoidable impurities, and $X_1$ which is calculated in accordance with formula (1) is 17.5 to 22.0 inclusive. (1) $X_1 = [Ni]_W + 0.5 \times [Cr]_W + 1.6 \times [Mn]_W + 0.5 \times [Si]w + 15 \times [C]_W$. In formula (1), $[Ni]w$, $[Cr]w$, $[Mn]w$, $[Si]w$ and $[C]w$ represent the contents (% by mass) of Ni, Cr, Mn, Si and C, respectively, relative to the entire mass of the wire.

EP 3 974 098 A1

**Description**

TECHNICAL FIELD

The present invention relates to an austenitic stainless steel flux-cored wire which can obtain a weld metal having excellent cryogenic toughness, a weld metal, and a welding method.

BACKGROUND ART

In recent years, from the viewpoint of reducing emission of carbon dioxide (greenhouse gas), liquefied natural gas (LNG) has been widely used as an energy source, and construction of a storage tank for storing liquefied natural gas has been advanced. Since such a storage tank needs to store liquefied natural gas at -162°C or lower, which is a temperature range of liquid, a base metal and a weld metal constituting the structure (tank or the like) are required to have excellent cryogenic toughness in a temperature range of, for example, around -196°C.

As a steel material having cryogenic toughness, for example, there has been known an austenitic stainless steel, and as a welding method for obtaining a weld metal having the same composition as that of the stainless steel, gas tungsten arc welding (GTAW) is generally used.

However, since a welding speed of the weld metal is slow in the gas tungsten arc welding, there is a problem that the construction efficiency is poor.

Therefore, Patent Literature 1 discloses an austenitic stainless steel wire for metal inert gas welding (MIG welding) which can obtain excellent weldability by reducing the contents of Al, B, and O which are inevitable impurities in the wire.

In addition, Patent Literature 2 discloses a flux-cored wire for stainless steel welding that can improve weldability and prevent hot crack by controlling a composition of a flux.

Further, Patent Literature 3 discloses a flux-cored wire for gas-shielded arc welding of low-temperature steel, which can obtain a weld metal having stable low-temperature toughness by adjusting the content of C in the stainless steel sheath and the contents of the metal component and the flux component in the wire.

CITATION LIST

PATENT LITERATURE

Patent Literature 1: JP-A-H6-690
Patent Literature 2: JP-A-2002-1580
Patent Literature 3: JP-A-2019-887

SUMMARY OF INVENTION

TECHNICAL PROBLEM

However, since neither of the wires described in Patent Literature 1 and Patent Literature 2 takes the cryogenic toughness into consideration, it is difficult to apply the wires to the construction of a storage tank for liquefied natural gas or the like. In addition, the wire described in Patent Literature 3 has good low-temperature toughness at -140°C, but it cannot be said that the wire has sufficient toughness at -196°C which is a lower temperature.

Therefore, there is a demand for the development of a wire and a welding method which can obtain a weld metal having extremely excellent cryogenic toughness as compared with a welding wire of related art.

The present invention has been made in view of the above circumstances, and an object of the present invention is to provide an austenitic stainless steel flux-cored wire which can obtain a weld metal having excellent cryogenic toughness, a weld metal having excellent cryogenic toughness, and a welding method.

SOLUTION TO PROBLEM

As a result of intensive studies to solve the above problems, the present inventors have found that, by appropriately adjusting a value calculated by a formula using the contents of Ni, Cr, Mn, Si, and C in a wire or a weld metal, transformation induced plasticity (TRIP) that transforms an austenite phase into a martensite phase at the time of breakage crack growth can be expressed, and cryogenic toughness can be improved.

In addition, the present inventors have found that a weld metal having extremely excellent cryogenic toughness can be obtained by appropriately adjusting the content of Mn and the total amount of the content of C and the content of N in the weld metal.

Further, the present inventors have found that, by limiting the metal components in the wire and the weld metal to a predetermined range, an excessive increase in strength and the like can be prevented, and as a result, the cryogenic toughness can be improved. The inventors have also found that the welding efficiency can be improved by performing arc welding with predetermined shielding gas using wires having various metal contents adjusted as described above. The present invention has been made based on these findings.

The above object of the present invention is achieved by the following configuration [1] related to an austenitic stainless steel flux-cored wire.

[1] An austenitic stainless steel flux-cored wire which is a flux-cored wire in which a steel sheath is filled with a flux, the austenitic stainless steel flux-cored wire containing, per total mass of a wire,

C: 0.018 mass% or less;
Si: 0.57 mass% or more and 1.00 mass% or less;
Mn: 0.70 mass% or more and 3.00 mass% or less;
P: 0.021 mass% or less;
Ni: 7.00 mass% or more and 13.00 mass% or less;
Cr: 12.00 mass% or more and 21.00 mass% or less;
N: 0.030 mass% or less,
with a remainder being Fe and inevitable impurities, in which
$X_1$ calculated by the following formula (1) is 17.5 or more and 22.0 or less,

$$X_1 = [Ni]_W + 0.5 \times [Cr]_W + 1.6 \times [Mn]_W + 0.5 \times [Si]_W + 15 \times [C]_W \,...(1).$$

In the formula (1), $[Ni]_W$, $[Cr]_W$, $[Mn]_W$, $[Si]_W$, and $[C]_W$ each represent the content (mass%) of Ni, Cr, Mn, Si, and C in the wire per the total mass of the wire.

A preferred embodiment of the present invention related to the austenitic stainless steel flux-cored wire relates to the following [2] to [6].

[2] The austenitic stainless steel flux-cored wire according to [1], further containing, per the total mass of the wire, $Li_2O$: 0.13 mass% or more.

[3] The austenitic stainless steel flux-cored wire according to [1] or [2], further containing, per the total mass of the wire, at least one of

Al: 2.00 mass% or less,
Mg: 2.00 mass% or less,
REM: 0.70 mass% or less,
Ca: 0.50 mass% or less, and
Zr: 0.40 mass% or less.

[4] The austenitic stainless steel flux-cored wire according to any one of [1] to [3], further containing, per the total mass of the wire, at least one of

one or both of Na and K in total: 0.60 mass% or less,
F: 0.50 mass% or less,
$Li_2O$: 0.50 mass% or less,
$BaF_2$: 10.0 mass% or less,
$SrF_2$: 10.0 mass% or less,
$CaF_2$: 10.0 mass% or less, and
$Fe_2O_3$: 2.00 mass% or less.

[5] The austenitic stainless steel flux-cored wire according to any one of [1] to [4], further containing, per the total mass of the wire, at least one of

Cu: 1.0 mass% or less,
Mo: 1.0 mass% or less,

Ti: 0.5 mass% or less,
W: 1.0 mass% or less, and
B: 0.01 mass% or less.

[6] The austenitic stainless steel flux-cored wire according to any one of [1] to [5], further containing at least one selected from the group consisting of Si oxide, Al oxide, Ti oxide, and Zr oxide, in which
per total mass of a wire, a total amount of the Si oxide, the Al oxide, the Ti oxide, and the Zr oxide is more than 0 mass% and 5 mass% or less.

The above object of the present invention is achieved by the following configuration [7] related to a weld metal.

[7] A weld metal containing, per total mass of the weld metal,

C: 0.065 mass% or less;
Si: 0.59 mass% or more and 1.00 mass% or less;
Mn: 0.80 mass% or more and 3.00 mass% or less;
P: 0.025 mass% or less;
Ni: 8.00 mass% or more and 15.00 mass% or less;
Cr: 15.00 mass% or more and 24.00 mass% or less;
N: 0.080 mass% or less;
O: 0.030 mass% or less,
with a remainder being Fe and inevitable impurities, in which
$X_2$ calculated by the following formula (2) is 18.8 or more and 23.0 or less,

$$X_2 = [Ni]_M + 0.5 \times [Cr]_M + 1.6 \times [Mn]_M + 0.5 \times [Si]_M + 15 \times [C]_M...(2).$$

In the formula (2), $[Ni]_M$, $[Cr]_M$, $[Mn]_M$, $[Si]_M$, and $[C]_M$ each represent the content (mass%) of Ni, Cr, Mn, Si, and C in the weld metal per the total mass of the weld metal.

A preferred embodiment of the present invention related to a weld metal relates to the following [8] to [10].

[8] The weld metal according to [7], in which per total mass of the weld metal, the content of Mn is 0.90 mass% or more, and $X_3$ calculated by the following formula (3) is 0.054 or less,

$$X_3 = [C]_M + [N]_M...(3).$$

In the formula (3), $[C]_M$ and $[N]_M$ each represent the content (mass%) of C and N in the weld metal per the total mass of the weld metal.

[9] The weld metal according to [7] or [8], further containing, per the total mass of the weld metal, at least one of

Al: 0.80 mass% or less,
Mg: 0.040 mass% or less,
REM: 0.080 mass% or less,
Ca: 0.005 mass% or less, and
Zr: 0.100 mass% or less.

[10] The weld metal according to any one of [7] to [9], further containing, per the total mass of the weld metal, at least one of

Cu: 1.0 mass% or less,
Mo: 1.0 mass% or less,
W: 1.0 mass% or less,
Ti: 0.5 mass% or less, and
B: 0.01 mass% or less.

The above object of the present invention is achieved by the following configuration [11] related to a welding method.

[11] A welding method comprising:
performing welding by

using the austenitic stainless steel flux-cored wire according to any one of [1] to [6], and

using, as a shielding gas, one selected from 100 vol% Ar gas, Ar-$O_2$ mixed gas containing 20 vol% or less of $O_2$ gas, and Ar-$CO_2$ mixed gas containing 5 vol% or less of $CO_2$.

ADVANTAGEOUS EFFECTS OF INVENTION

According to the austenitic stainless steel flux-cored wire of the present invention, the cryogenic toughness of the weld metal can be further improved. In addition, according to the welding method of the present invention, a weld metal having excellent cryogenic toughness can be obtained, and welding efficiency can be improved.

BRIEF DESCRIPTION OF DRAWINGS

[FIG. 1] FIG. 1 is a schematic view showing a welding method according to the present embodiment.
[FIG. 2] FIG. 2 is a schematic view showing a position at which a test piece is collected in a Charpy impact test.

DESCRIPTION OF EMBODIMENTS

Hereinafter, modes for carrying out the present invention (the present embodiment) are described in detail. It should be noted that the present invention is not limited to the embodiment described below, and can be optionally changed without departing from the scope of the present invention.
First, a flux-cored wire according to the present embodiment will be described.

[Flux-cored Wire]

In the flux-cored wire according to the present embodiment, a steel sheath (hoop) is filled with a flux. Specifically, the flux-cored wire includes a cylindrical steel sheath and a flux with which the sheath thereof is filled. The flux-cored wire may be in any form of a seamless type having no seam in the sheath, and a seam type having a seam in the sheath, such as a C cross section and an overlapped cross section.
A thickness and a wire diameter (diameter) of the steel sheath of the flux-cored wire according to the present embodiment are not particularly limited, but from the viewpoint of wire feeding stability, the preferable wire diameter is 1.0 mm to 2.8 mm, and the more preferable wire diameter is 1.2 mm to 2.4 mm.
Next, regarding the chemical composition of the flux-cored wire according to the present embodiment, the reason for adding components and the reason for limiting the composition are described in detail. Each element for obtaining the weld metal having the required properties may be added to either of a steel sheath and a filling flux. Therefore, unless otherwise specified in the following description, the amount of each component in the flux-cored wire is specified by a value obtained by defining the total amount of the components contained in the steel sheath and the flux as the content per total mass of the wire (the total amount of the steel sheath and the flux in the sheath).
In the present specification, the chemical composition (mass ratio) of the flux-cored wire is a design value, but a flux-cored wire having substantially the same composition as the design value can be obtained. The chemical composition of the wire can be identified by composition identification of flux particles by an electron beam microanalyzer or an X-ray diffraction method and chemical analysis of a solution in which an entire wire is dissolved (ICP emission spectroscopy, atomic absorption spectroscopy, or the like). The chemical composition of a weld metal described later can also be identified in the same manner.

<C: 0.018 mass% or less (including 0 mass%)>

C is a component that stabilizes an austenite phase in the weld metal and makes the austenite phase less likely to transform into a martensite phase. In addition, C is also a component that contributes to an increase in the strength of the weld metal.
When the content of C in the wire exceeds 0.018 mass%, the strength is excessively increased, and it becomes difficult to obtain excellent cryogenic toughness. In the flux-cored wire according to the present embodiment, it is preferable to reduce the total amount of the content of C and the content of N in the weld metal in order to further improve cryogenic toughness as described below. Therefore, in order to reduce the total amount of the content of C and the content of N in the weld metal, it is preferable to reduce the content of C in the wire. Therefore, the content of C in the wire is 0.018 mass% or less, preferably 0.015 mass% or less, and more preferably 0.010 mass% or less.

<Si: 0.57 mass% or more and 1.00 mass% or less>

Si is a component having an effect of promoting deoxidation.

When the content of Si in the wire is less than 0.57 mass%, the deoxidizing effect is insufficient, and the amount of oxygen in the weld metal is increased, so that excellent cryogenic toughness cannot be obtained. Therefore, the content of Si in the wire is 0.57 mass% or more, preferably 0.60 mass% or more, and more preferably 0.65 mass% or more.

On the other hand, when the content of Si in the wire exceeds 1.00 mass%, the strength of the weld metal is excessively increased, and thus the excellent cryogenic toughness cannot be obtained. Therefore, the content of Si in the wire is 1.00 mass% or less, preferably 0.90 mass% or less, and more preferably 0.85 mass% or less.

<Mn: 0.70 mass% or more and 3.00 mass% or less>

Mn is an austenite stabilizing element and is a component as a deoxidizing agent having an effect of removing oxygen in the weld metal as slag to improve mechanical strength.

When the content of Mn in the wire is less than 0.70 mass%, the deoxidizing effect is insufficient, and the amount of oxygen in the weld metal is increased, so that the excellent cryogenic toughness cannot be obtained. Therefore, the content of Mn in the wire is 0.70 mass% or more, preferably 0.90 mass% or more, and more preferably 1.00 mass% or more.

On the other hand, when the content of Mn in the wire exceeds 3.00 mass%, the strength of the weld metal is excessively increased, and the cryogenic toughness is decreased. Therefore, the content of Mn in the wire is 3.00 mass% or less, preferably 2.50 mass% or less, and more preferably 2.20 mass% or less.

<P: 0.021 mass% or less (including 0 mass%)>

In the flux-cored wire according to the present embodiment, P is an impurity element.

When the content of P in the wire exceeds 0.021 mass%, a grain boundary becomes brittle, and the cryogenic toughness is decreased. Therefore, the content of P in the wire is 0.021 mass% or less, preferably 0.020 mass% or less, and more preferably 0.019 mass% or less.

<Ni: 7.00 mass% or more and 13.00 mass% or less>

Ni is a component that stabilizes the austenite phase in the weld metal and prevents transformation to the martensite phase.

When the content of Ni in the wire is less than 7.00 mass%, the austenite phase becomes unstable, and ferrite transformation partially occurs in a welded state (that is, at a stage where the welding is finished). As a result, the austenite phase, which is a premise of the transformation induced plasticity (TRIP) effect, is insufficient at the time of breakage crack growth, and the cryogenic toughness is decreased. Therefore, the content of Ni in the wire is 7.00 mass% or more, preferably 7.50 mass% or more, and more preferably 8.00 mass% or more.

On the other hand, when the content of Ni in the wire exceeds 13.00 mass%, the austenite phase is excessively stabilized, and the TRIP effect cannot be exhibited at the time of breakage crack growth, so that the excellent cryogenic toughness cannot be obtained. Therefore, the content of Ni in the wire is 13.00 mass% or less, preferably 12.80 mass% or less, and more preferably 12.50 mass% or less.

<Cr: 12.00 mass% or more and 21.00 mass% or less>

Cr is a component that stabilizes the ferrite phase in the weld metal and prevents transformation to the martensite phase.

When the content of Cr in the wire is less than 12.00 mass%, the ferrite phase becomes unstable, and the TRIP effect cannot be exhibited at the time of breakage crack growth, so that the excellent cryogenic toughness cannot be obtained. Therefore, the content of Cr in the wire is 12.00 mass% or more, preferably 13.00 mass% or more, and more preferably 14.00 mass% or more.

On the other hand, when the content of Cr in the wire exceeds 21.00 mass%, the ferrite phase is excessively stabilized, and the ferrite transformation partially occurs in a welded state. As a result, the austenite phase, which is the premise of the TRIP effect, is insufficient at the time of breakage crack growth, and the cryogenic toughness is decreased. Therefore, the content of Cr in the wire is 21.00 mass% or less, preferably 20.50 mass% or less, and more preferably 20.00 mass% or less.

<N: 0.030 mass% or less (including 0 mass%)>

N is a component that stabilizes the austenite phase in the weld metal and prevents transformation to the martensite phase. In addition, N is also a component that contributes to an increase in the strength of the weld metal.

When the content of N in the wire exceeds 0.030 mass%, the strength is excessively increased, and it becomes difficult to obtain excellent cryogenic toughness. In the flux-cored wire according to the present embodiment, as described below, in order to further improve cryogenic toughness, it is preferable to reduce the total amount of the content of C and the content of N in the weld metal. Therefore, in order to reduce the total amount of the content of C and the content of N in the weld metal, it is preferable to reduce the content of N in the wire. Therefore, the content of N in the wire is 0.030 mass% or less, preferably 0.025 mass% or less, and more preferably 0.020 mass% or less.

<Remainder: Fe and Inevitable Impurities>

Other components that are contained in the flux-cored wire according to the present embodiment include Fe and inevitable impurities, and examples of the inevitable impurities include As, Sb, Sn, Bi, S, Nb, V, and O.

<$X_1$ calculated by Formula (1): 17.5 or more and 22.0 or less>

As described above, by adjusting the contents of Ni, Cr, Mn, Si, and C in the wire in a balanced manner, TRIP that transforms an austenite phase into a martensite phase at the time of breakage crack growth can be expressed, and the cryogenic toughness can be improved. That is, in the present embodiment, the above components in the wire are adjusted in a predetermined range, and each element is adjusted so that $X_1$ calculated by the following formula (1) is in a desired range.

$$X_1 = [Ni]_W + 0.5 \times [Cr]_W + 1.6 \times [Mn]_W + 0.5 \times [Si]_W + 15 \times [C]_W \ldots (1)$$

In the formula (1), $[Ni]_w$, $[Cr]_w$, $[Mn]_w$, $[Si]_w$, and $[C]_w$ each represent the content (mass%) of Ni, Cr, Mn, Si, and C in the wire per the total mass of the wire.

When $X_1$ calculated by the formula (1) is less than 17.5, the austenite phase becomes unstable, and ferrite transformation partially occurs in a welded state. As a result, the austenite phase, which is the premise of the TRIP effect, is insufficient at the time of breakage crack growth, and the cryogenic toughness is decreased. Therefore, $X_1$ calculated by the formula (1) is 17.5 or more, preferably 18.0 or more, and more preferably 18.5 or more.

On the other hand, when $X_1$ calculated by the formula (1) exceeds 22.0, the austenite phase is excessively stabilized, and the TRIP effect cannot be exhibited at the time of breakage crack growth, so that the excellent cryogenic toughness cannot be obtained. Therefore, $X_1$ calculated by the formula (1) is 22.0 or less, preferably 21.0 or less, and more preferably 20.0 or less.

As described above, the flux-cored wire according to the present embodiment includes the elements described above, Fe, and inevitable impurities, but the flux-cored wire may contain the following components as optional components in a predetermined content.

Since Al, Mg, REM, Ca, and Zr are deoxidizing elements, the flux-cored wire according to the present embodiment may further contain at least one of Al, Mg, REM, Ca, and Zr in a predetermined range. The limited range of each component will be described below.

<Al: 2.00 mass% or less (including 0 mass%)>

Since Al is a deoxidizing element, the flux-cored wire according to the present embodiment may further contain Al. However, when the content of Al in the wire exceeds 2.00 mass%, weldability becomes poor. Therefore, when Al is contained in the wire, the content of Al in the wire is 2.00 mass% or less, preferably 1.80 mass% or less, and more preferably 1.50 mass% or less.

<Mg: 2.00 mass% or less (including 0 mass%)>

Since Mg is a deoxidizing element, the flux-cored wire according to the present embodiment may further contain Mg. However, when the content of Mg in the wire exceeds 2.00 mass%, the weldability becomes poor. Therefore, when Mg is contained in the wire, the content of Mg in the wire is 2.00 mass% or less, preferably 1.50 mass% or less, and more preferably 0.60 mass% or less.

<REM: 0.70 mass% or less (including 0 mass%)>

Since a rare earth element (REM) is a deoxidizing element, the flux-cored wire according to the present embodiment may further contain REM. However, when the content of REM in the wire exceeds 0.70 mass%, the weldability becomes poor. Therefore, when REM is contained in the wire, the content of REM in the wire is 0.70 mass% or less, preferably 0.60 mass% or less, and more preferably 0.50 mass% or less.

REM in the flux-cored wire according to the present embodiment means 15 lanthanoid series rare earth elements from La to Lu in a periodic table. These elements may be added alone, or two or more of these elements may be used in combination. In the flux-cored wire according to the present embodiment, La and Ce are preferably used as REM.

<Ca: 0.50 mass% or less (including 0 mass%)>

Since Ca is a deoxidizing element, the flux-cored wire according to the present embodiment may further contain Ca. However, when the content of Ca in the wire exceeds 0.50 mass%, the weldability becomes poor. Therefore, when Ca is contained in the wire, the content of Ca in the wire is 0.50 mass% or less, preferably 0.40 mass% or less, and more preferably 0.30 mass% or less.

<Zr: 0.40 mass% or less (including 0 mass%)>

Since Zr is a deoxidizing element, the flux-cored wire according to the present embodiment may further contain Zr. However, when the content of Zr in the wire exceeds 0.40 mass%, the weldability becomes poor. Therefore, when Zr is contained in the wire, the content of Zr in the wire is 0.40 mass% or less, preferably 0.30 mass% or less, and more preferably 0.20 mass% or less.

Since Na and K, F, $Li_2O$, $BaF_2$, $SrF_2$, $CaF_2$, and $Fe_2O_3$ are components that can improve the weldability, the flux-cored wire according to the present embodiment may further contain at least one of Na and K, F, $Li_2O$, $BaF_2$, $SrF_2$, $CaF_2$, and $Fe_2O_3$ in a predetermined range. The limited range of each component will be described below.

<Total of one or both of Na and K: 0.60 mass% or less (including 0 mass%)>

Since Na and K are elements that can improve the weldability, such as improving arc stability and stabilizing droplet transfer and bead formation, the flux-cored wire according to the present embodiment may further contain one or both of Na and K. However, when the total content of Na and K in the wire exceeds 0.60 mass%, the weldability becomes poor. Therefore, when one or both of Na and K are contained in the wire, the total content of one or both of Na and K in the wire is 0.60 mass% or less, preferably 0.40 mass% or less, and more preferably 0.30 mass% or less.

<F: 0.50 mass% or less (including 0 mass%)>

Since F is an element that can improve the weldability, such as improving arc stability and stabilizing droplet transfer and bead formation, the flux-cored wire according to the present embodiment may further contain F from the viewpoint of improving the weldability. However, when the content of F in the wire exceeds 0.50 mass%, the weldability becomes poor. Therefore, when F is contained in the wire, the content of F in the wire is 0.50 mass% or less, preferably 0.40 mass% or less, and more preferably 0.30 mass% or less. Note that F regulated here is F added from a compound other than $BaF_2$, $SrF_2$, and $CaF_2$ which are described later, and can be added from a compound such as NaF, $K_2SiF_6$, cryolite ($Na3AlF_6$), and $Na_2SiF_6$.

<$Li_2O$: 0.13 mass% or more and 0.50 mass% or less>

Since $Li_2O$ is a component that can improve the weldability, such as improving arc stability and stabilizing droplet transfer and bead formation, the flux-cored wire according to the present embodiment may further contain $Li_2O$ as a slag forming agent from the viewpoint of improving the weldability.

As described later, in the flux-cored wire according to the present embodiment, it is preferable to reduce the total amount of the content of C and the content of N in the weld metal in order to further improve the cryogenic toughness. When $Li_2O$ is contained in an appropriate content in the wire, Li ions and oxygen ions are separated from each other in an arc during welding, and then Li ions and nitrogen are bonded to each other to form a Li nitride. Since the Li nitride is finally discharged as slag from the weld metal, when a predetermined amount of $Li_2O$ is contained in the wire, as a result, the total amount of the content of C and the content of N in the weld metal can be reduced. Therefore, in order to further improve the cryogenic toughness, the content of $Li_2O$ in the wire is preferably 0.13 mass% or more, and more preferably 0.14 mass% or more.

On the other hand, when the content of $Li_2O$ in the wire exceeds 0.50 mass%, the weldability becomes poor. Therefore, when $Li_2O$ is contained in the wire, the content of $Li_2O$ in the wire is preferably 0.50 mass% or less, more preferably 0.40 mass% or less, and still more preferably 0.30 mass% or less.

<$BaF_2$: 10.0 mass% or less (including 0 mass%)>

Since $BaF_2$ is a component that can improve the weldability, such as improving arc stability and stabilizing droplet transfer and bead formation, the flux-cored wire according to the present embodiment may further contain $BaF_2$ as a slag forming agent from the viewpoint of improving the weldability. However, when the content of $BaF_2$ in the wire exceeds 10.0 mass%, the weldability becomes poor. Therefore, when $BaF_2$ is contained in the wire, the content of $BaF_2$ in the wire is 10.0 mass% or less, preferably 9.0 mass% or less, and more preferably 8.0 mass% or less.

<$SrF_2$: 10.0 mass% or less (including 0 mass%)>

Since $SrF_2$ is a component that can improve the weldability, such as improving arc stability and stabilizing droplet transfer and bead formation, the flux-cored wire according to the present embodiment may further contain $SrF_2$ as a slag forming agent from the viewpoint of improving the weldability. However, when the content of $SrF_2$ in the wire exceeds 10.0 mass%, the weldability becomes poor. Therefore, when $SrF_2$ is contained in the wire, the content of $SrF_2$ in the wire is 10.0 mass% or less, preferably 9.0 mass% or less, and more preferably 7.0 mass% or less.

<$CaF_2$: 10.0 mass% or less (including 0 mass%)>

Since $CaF_2$ is a component that can improve the weldability such as improving arc stability and stabilizing droplet transfer and bead formation, the flux-cored wire according to the present embodiment may further contain $CaF_2$ as a slag forming agent from the viewpoint of improving the weldability. However, when the content of $CaF_2$ in the wire exceeds 10.0 mass%, the weldability becomes poor. Therefore, when $CaF_2$ is contained in the wire, the content of $CaF_2$ in the wire is 10.0 mass% or less, preferably 9.0 mass% or less, and more preferably 7.0 mass% or less.

<$Fe_2O_3$: 2.00 mass% or less (including 0 mass%)>

Since $Fe_2O_3$ is a component that can improve the weldability, such as improving arc stability and stabilizing droplet transfer and bead formation, the flux-cored wire according to the present embodiment may further contain $Fe_2O_3$ as a slag forming agent from the viewpoint of improving the weldability. However, when the content of $Fe_2O_3$ in the wire exceeds 2.00 mass%, the weldability becomes poor. Therefore, when $Fe_2O_3$ is contained in the wire, the content of $Fe_2O_3$ in the wire is 2.00 mass% or less, preferably 1.50 mass% or less, and more preferably 1.00 mass% or less.

<Cu: 1.0 mass% or less, Mo: 1.0 mass% or less, W: 1.0 mass% or less, Ti: 0.5 mass% or less, and B: 0.01 mass% or less (including 0 mass%)>

Since Cu, Mo, W, Ti, and B are components effective in improving the strength of the weld metal, the flux-cored wire according to the present embodiment may further contain at least one of Cu, Mo, W, Ti, and B in a predetermined range from the viewpoint of increasing the strength. However, when at least one of Cu, Mo, W, Ti, and B is added in an amount exceeding a predetermined amount, the strength is excessively increased and the toughness is lowered. Therefore, when Cu, Mo, W, Ti, and B are contained in the wire, the content of each of Cu, Mo, and W in the wire is 1.0 mass% or less, preferably 0.8 mass% or less, and more preferably 0.5 mass% or less. The content of Ti in the wire is 0.5 mass% or less, preferably 0.3 mass% or less, and more preferably 0.2 mass% or less. The content of B in the wire is 0.01 mass% or less, preferably 0.008 mass% or less, and more preferably 0.005 mass% or less.

<Other Components>

In addition, the flux-cored wire according to the present embodiment may further contain Si oxide, Al oxide, Ti oxide, Zr oxide, or the like as a component other than the optional components described above. The total amount thereof may be, for example, in a range of more than 0 mass% and 5 mass% or less.

<Weld Metal>

The weld metal according to the present embodiment can be formed by welding using the austenitic stainless steel flux-cored wire described above. Next, regarding a chemical composition of the weld metal according to the present embodiment, the reason for adding components and the reason for limiting the composition are described in detail.

Note that each element is specified by a value obtained by defining the total amount of components contained in the weld metal in a predetermined region that is not affected by the composition of the base metal as the content per total mass of the weld metal.

<C: 0.065 mass% or less (including 0 mass%)>

C is a component that stabilizes an austenite phase in the weld metal and makes the austenite phase less likely to transform into a martensite phase. In addition, C is also a component that contributes to an increase in the strength of the weld metal.

When the content of C in the weld metal exceeds 0.065 mass%, the strength is excessively increased, and it becomes difficult to obtain excellent cryogenic toughness. Therefore, the content of C in the weld metal is 0.065 mass% or less, preferably 0.050 mass% or less, and more preferably 0.045 mass% or less.

<Si: 0.59 mass% or more and 1.00 mass% or less>

Si is a component having an effect of promoting deoxidation.

When the content of Si in the weld metal is less than 0.59 mass%, the deoxidizing effect is insufficient, and the amount of oxygen in the weld metal is increased, so that the excellent cryogenic toughness cannot be obtained. Therefore, the content of Si in the weld metal is 0.59 mass% or more, preferably 0.60 mass% or more, and more preferably 0.61 mass% or more.

On the other hand, when the content of Si in the weld metal exceeds 1.00 mass%, the strength of the weld metal is excessively increased, and thus the excellent cryogenic toughness cannot be obtained. Therefore, the content of metal Si in the weld metal is 1.00 mass% or less, preferably 0.90 mass% or less, and more preferably 0.80 mass% or less.

<Mn: 0.80 mass% or more and 3.00 mass% or less>

Mn is an austenite stabilizing element and is a component having an effect of removing oxygen in the weld metal as slag as a deoxidizing agent to improve mechanical strength.

When the content of Mn in the weld metal is less than 0.80 mass%, the deoxidizing effect is insufficient, and the amount of oxygen in the weld metal is increased, so that the excellent cryogenic toughness cannot be obtained. Therefore, the content of Mn in the weld metal is 0.80 mass% or more, preferably 0.90 mass% or more, and more preferably 1.00 mass% or more.

On the other hand, when the content of Mn in the weld metal exceeds 3.00 mass%, the strength of the weld metal is excessively increased, and the cryogenic toughness is decreased. Therefore, the content of Mn in the weld metal is 3.00 mass% or less, preferably 2.20 mass% or less, and more preferably 1.80 mass% or less.

<P: 0.025 mass% or less (including 0 mass%)>

In the weld metal according to the present embodiment, P is an impurity element.

When the content of P in the weld metal exceeds 0.025 mass%, the grain boundary becomes brittle, and the cryogenic toughness is decreased. Therefore, the content of P in the weld metal is 0.025 mass% or less, preferably 0.022 mass% or less, and more preferably 0.020 mass% or less.

<Ni: 8.00 mass% or more and 15.00 mass% or less>

Ni is a component that stabilizes the austenite phase in the weld metal and prevents transformation to the martensite phase.

When the content of Ni in the weld metal is less than 8.00 mass%, the austenite phase becomes unstable, and ferrite transformation partially occurs in a welded state. As a result, the austenite phase, which is the premise of the TRIP effect, is insufficient at the time of breakage crack growth, and the cryogenic toughness is decreased. Therefore, the content of Ni in the weld metal is 8.00 mass% or more, preferably 8.20 mass% or more, and more preferably 9.00 mass% or more.

On the other hand, when the content of Ni in the weld metal exceeds 15.00 mass%, the austenite phase is excessively stabilized, and the TRIP effect cannot be exhibited at the time of breakage crack growth, so that the excellent cryogenic toughness cannot be obtained. Therefore, the content of Ni in the weld metal is 15.00 mass% or less, preferably 13.00 mass% or less, and more preferably 12.00 mass% or less.

<Cr: 15.00 mass% or more and 24.00 mass% or less>

Cr is a component that stabilizes the ferrite phase in the weld metal and prevents transformation to the martensite phase.

When the content of Cr in the weld metal is less than 15.00 mass%, the ferrite phase becomes unstable, and the TRIP effect cannot be exhibited at the time of breakage crack growth, so that the excellent cryogenic toughness cannot be obtained. Therefore, the content of Cr in the weld metal is 15.00 mass% or more, preferably 15.50 mass% or more, and more preferably 16.00 mass% or more.

On the other hand, when the content of Cr in the weld metal exceeds 24.00 mass%, the ferrite phase is excessively stabilized, and ferrite transformation partially occurs in a welded state. As a result, the austenite phase, which is the premise of the TRIP effect, is insufficient at the time of breakage crack growth, and the cryogenic toughness is decreased. Therefore, the content of Cr in the weld metal is 24.00 mass% or less, preferably 21.00 mass% or less, and more preferably 20.00 mass% or less.

<N: 0.080 mass% or less (including 0 mass%)>

N is a component that stabilizes the austenite phase in the weld metal and prevents transformation to the martensite phase. In addition, N is also a component that contributes to an increase in the strength of the weld metal.

When the content of N in the weld metal exceeds 0.080 mass%, the strength is excessively increased, and it becomes difficult to obtain the excellent cryogenic toughness. Therefore, the content of N in the weld metal is 0.080 mass% or less, preferably 0.050 mass% or less, and more preferably 0.030 mass% or less.

<O: 0.030 mass% or less (including 0 mass%)>

O is an element that forms an oxide in the weld metal.

When the content of O in the weld metal exceeds 0.030 mass%, the oxide is increased, and the breakage starting from the oxide is likely to occur, so that the toughness is reduced. Therefore, the content of O in the weld metal is 0.030 mass% or less, preferably 0.027 mass% or less, and more preferably 0.022 mass% or less.

<Remainder: Fe and Inevitable Impurities>

Other components that are contained in the weld metal according to the present embodiment include Fe and inevitable impurities, and examples of the inevitable impurities include Nb, V, As, Sb, Sn, Bi, and S.

<$X_2$ Calculated by Formula (2): 18.8 or more and 23.0 or less>

As described above, by adjusting the contents of Ni, Cr, Mn, Si, and C in the weld metal in a balanced manner, TRIP that transforms an austenite phase into a martensite phase at the time of breakage crack growth can be expressed, and the cryogenic toughness can be improved. That is, in the present embodiment, the components described above in the weld metal are adjusted in a predetermined range, and each element is adjusted so that $X_2$ calculated by the following formula (2) is in a desired range.

$$X_2 = [Ni]_M + 0.5 \times [Cr]_M + 1.6 \times [Mn]_M + 0.5 \times [Si]_M + 15 \times [C]_M \ldots (2)$$

In the formula (2), $[Ni]_M$, $[Cr]_M$, $[Mn]_M$, $[Si]_M$, and $[C]_M$ each represent the content (mass%) of Ni, Cr, Mn, Si, and C in the weld metal per the total mass of the weld metal.

When $X_2$ calculated by the formula (2) is less than 18.8, the austenite phase becomes unstable, and ferrite transformation partially occurs in the welded state. As a result, the austenite phase, which is the premise of the TRIP effect, is insufficient at the time of breakage crack growth, and the cryogenic toughness is decreased. Therefore, $X_2$ calculated by the formula (2) is 18.8 or more, preferably 19.8 or more, and more preferably 20.5 or more.

On the other hand, when $X_2$ calculated by the formula (2) exceeds 23.0, the austenite phase is excessively stabilized, and the TRIP effect cannot be exhibited at the time of breakage crack growth, so that the excellent cryogenic toughness cannot be obtained. Therefore, $X_2$ calculated by the formula (2) is 23.0 or less, preferably 22.8 or less, and more preferably 22.6 or less.

<X₃ Calculated by Formula (3): 0.054 or less and Mn: 0.90 mass% or more>

When a value of $X_2$ in the weld metal is adjusted, the total amount of the content of C and the content of N in the weld metal is further reduced, and the content of Mn is appropriately adjusted, the stacking fault energy of austenite is reduced, and hexagonal closepacked (HCP) martensite ($\varepsilon$ martensite) is more easily formed. The $\varepsilon$-martensite becomes a TRIP precursor that transforms austenite to body-centered cubic (BCC) martensite at the time of breakage crack growth, thereby promoting TRIP, and as a result, the cryogenic toughness can be further improved.

The above effect can be obtained when $X_3$ calculated by the following formula (3) is 0.054 or less and the content of Mn in the weld metal is 0.90 mass% or more. Therefore, in the weld metal, $X_3$ is preferably 0.054 or less, and Mn is preferably 0.90 mass% or more. $X_3$ is more preferably 0.052 or less, and still more preferably 0.050 or less. The content of Mn is more preferably 1.00 mass% or more.

$$X_3 = [C]_M + [N]_M...(3)$$

In the formula (3), $[C]_M$ and $[N]_M$ each represent the content (mass%) of C and N in the weld metal per the total mass of the weld metal.

As described above, the weld metal according to the present embodiment includes the elements described above, Fe, and inevitable impurities, but the weld metal may contain the following components as optional components in a predetermined content.

Since Al, Mg, REM, Ca, and Zr are deoxidizing elements, the weld metal according to the present embodiment may further contain at least one of Al, Mg, REM, Ca, and Zr in a predetermined range. The limited range of each component will be described below.

<Al: 0.80 mass% or less (including 0 mass%)>

Since Al is a deoxidizing element, the weld metal according to the present embodiment may further contain Al. However, when the content of Al in the weld metal exceeds 0.80 mass%, the weldability becomes poor. Therefore, when Al is contained in the weld metal, the content of Al in the weld metal is 0.80 mass% or less, preferably 0.70 mass% or less, and more preferably 0.50 mass% or less.

<Mg: 0.040 mass% or less (including 0 mass%)>

Since Mg is a deoxidizing element, the weld metal according to the present embodiment may further contain Mg. However, when the content of Mg in the weld metal exceeds 0.040 mass%, the weldability becomes poor. Therefore, when Mg is contained in the weld metal, the content of Mg in the weld metal is 0.040 mass% or less, preferably 0.030 mass% or less, and more preferably 0.020 mass% or less.

<REM: 0.080 mass% or less (including 0 mass%)>

Since a rare earth element (REM) is a deoxidizing element, the weld metal according to the present embodiment may further contain REM. However, when the content of REM in the weld metal exceeds 0.080 mass%, the weldability becomes poor. Therefore, when REM is contained in the weld metal, the content of REM in the weld metal is 0.080 mass% or less, preferably 0.050 mass% or less, and more preferably 0.030 mass% or less.

REM in the weld metal according to the present embodiment means 15 lanthanoid series rare earth elements from La to Lu in the periodic table. These elements may be added alone, or two or more of these elements may be used in combination. In the weld metal according to the present embodiment, La and Ce are preferably used as REM.

<Ca: 0.005 mass% or less (including 0 mass%)>

Since Ca is a deoxidizing element, the weld metal according to the present embodiment may further contain Ca. However, when the content of Ca in the weld metal exceeds 0.005 mass%, the weldability becomes poor. Therefore, when Ca is contained in the weld metal, the content of Ca in the weld metal is 0.005 mass% or less, preferably 0.004 mass% or less, and more preferably 0.003 mass% or less.

<Zr: 0.100 mass% or less (including 0 mass%)>

Since Zr is a deoxidizing element, the weld metal according to the present embodiment may further contain Zr. However, when the content of Zr in the weld metal exceeds 0.100 mass%, the weldability becomes poor. Therefore, when Zr is contained in the weld metal, the content of Zr in the weld metal is 0.100 mass% or less, preferably 0.080 mass% or less, and more preferably 0.050 mass% or less.

<Cu: 1.0 mass% or less, Mo: 1.0 mass% or less, W: 1.0 mass% or less, Ti: 0.5 mass% or less, and B: 0.01 mass% or less (including 0 mass%)>

Since Cu, Mo, W, Ti, and B are components effective in improving the strength of the weld metal, the weld metal according to the present embodiment may further contain at least one of Cu, Mo, W, Ti, and B from the viewpoint of increasing the strength. However, when the content exceeds a predetermined amount, the strength is excessively increased and the toughness is lowered. Therefore, when Cu, Mo, W, Ti, and B are contained in the weld metal, the contents of Cu, Mo, and W in the weld metal are each 1.0 mass% or less, preferably 0.8 mass% or less, and more preferably 0.5 mass% or less. The content of Ti in the weld metal is 0.5 mass% or less, preferably 0.3 mass% or less, and more preferably 0.2 mass% or less. The content of B in the weld metal is 0.01 mass% or less, preferably 0.008 mass% or less, and more preferably 0.005 mass% or less.

<Method for Producing Flux-cored Wire>

A method for producing a flux-cored wire according to the present embodiment is not particularly limited, and the flux-cored wire can be produced by, for example, the following method.
First, a steel strip constituting a steel sheath is prepared, and the steel strip is molded by a molding roller while being fed in a longitudinal direction to form a U-shaped open tube. Next, the steel sheath is filled with a flux in which various raw materials are blended so as to have a predetermined composition, and thereafter, the steel sheath is processed so as to have a circular cross section. Thereafter, the steel sheet is drawn by cold working to obtain a flux-cored wire having a wire diameter of, for example, 1.2 mm to 2.4 mm. Annealing may be performed during the cold working.

<Welding Method>

The present invention also relates to a gas-shielded arc welding method. The austenitic stainless steel flux-cored wire according to the present embodiment described above can be applied to various welding methods, and can be suitably used for gas shielded arc welding (FCAW: flux cored arc welding) which is superior in welding efficiency as compared with gas tungsten arc welding. Note that welding conditions other than the welding method described below can be set to be the same as generally used conditions, and thus detailed description thereof will be omitted.
When welding is performed by gas-shielded arc welding using the austenitic stainless steel flux-cored wire, 100 vol% Ar gas, Ar-$O_2$ mixed gas, or Ar-$CO_2$ mixed gas can be used as the shielding gas. However, when a mixed gas containing $O_2$ gas and $CO_2$ gas in excess of a predetermined concentration is used, the amount of oxygen in the weld metal is increased, and thus the excellent cryogenic toughness cannot be obtained.
In addition, in the flux-cored wire according to the present embodiment, it is preferable to reduce the total amount of the content of C and the content of N in the weld metal, but when welding is performed using a shielding gas having a high content of $CO_2$ gas, the content of C in the weld metal is increased, and thus the content of $CO_2$ gas in the shielding gas is preferably small.
Therefore, in the welding method according to the present embodiment, welding is performed by gas-shielded arc welding using the austenitic stainless steel flux-cored wire, and welding can be performed using, as the shielding gas, one gas selected from 100 vol% Ar gas, Ar-$O_2$ mixed gas containing 20 vol% or less of $O_2$ gas, and an Ar-$CO_2$ mixed gas containing 5 vol% or less of $CO_2$ gas.
When Ar-$O_2$ mixed gas is used as the shielding gas, the content of $O_2$ gas is preferably 10 vol% or less. When Ar-$CO_2$ mixed gas is used as the shielding gas, the content of $CO_2$ gas is preferably 2 vol% or less.

Example

Hereinafter, the present invention is described in more detail with reference to Examples, but the present invention is not limited thereto.

[Production of Wire]

In accordance with AWS A5.22/A5.22M, flux-cored wires having various chemical compositions in which a steel sheath was filled with a flux were produced. The contents of the chemical components contained in the obtained flux-cored wire are shown in Table 1 below. The chemical composition of each wire shown in Table 1 is a design value.

In Table 1, "0" indicates that the component was not intentionally added at the time of producing the wire. In addition, wires No. J to N, No. V, and No. W contain Si oxide, Al oxide, Ti oxide, Zr oxide, and the like as other components (see a column of "others" in Table 1).

[Table 1]

| Wire No. | Chemical composition of wire (mass%, remainder being Fe and inevitable impurities) | | | | | | | | | | | | | | | | | | | $X_1$ calculated by formula (1) |
| | C | Si | Mn | P | Ni | Cr | N | Al | Mg | REM | Ca | Zr | Na | F | $Li_2O$ | $BaF_2$ | $SrF_2$ | $Fe_2O_3$ | Others* | |
|---|---|---|---|---|---|---|---|---|---|---|---|---|---|---|---|---|---|---|---|---|
| A | 0.007 | 0.83 | 1.36 | 0.017 | 9.40 | 16.92 | 0.014 | 0.37 | 0.51 | 0.19 | 0.15 | 0.09 | 0.04 | 0.03 | 0.14 | 6.6 | 0 | 0.71 | 0 | 20.6 |
| B | 0.008 | 0.83 | 1.36 | 0.018 | 9.40 | 16.92 | 0.014 | 0.37 | 0.51 | 0.19 | 0.15 | 0.09 | 0.04 | 0.03 | 0.14 | 0 | 6.5 | 0.71 | 0 | 20.6 |
| C | 0.007 | 0.82 | 1.37 | 0.017 | 7.64 | 16.80 | 0.011 | 0 | 0.37 | 0.47 | 0.15 | 0.09 | 0.04 | 0.03 | 0.14 | 7.3 | 0 | 0.72 | 0 | 18.7 |
| D | 0.007 | 0.82 | 1.37 | 0.017 | 8.54 | 16.80 | 0.011 | 0 | 0.37 | 0.47 | 0.15 | 0.09 | 0.04 | 0.03 | 0.14 | 7.3 | 0 | 0.72 | 0 | 19.6 |
| E | 0.007 | 0.82 | 1.37 | 0.017 | 9.44 | 14.72 | 0.011 | 0 | 0.37 | 0.47 | 0.15 | 0.09 | 0.04 | 0.03 | 0.14 | 7.3 | 0 | 0.72 | 0 | 19.5 |
| F | 0.007 | 0.82 | 1.37 | 0.017 | 9.44 | 15.75 | 0.011 | 0 | 0.37 | 0.47 | 0.15 | 0.09 | 0.04 | 0.03 | 0.14 | 7.3 | 0 | 0.72 | 0 | 20.0 |
| Invention Example G | 0.007 | 0.82 | 0.93 | 0.017 | 9.44 | 16.80 | 0.011 | 0 | 0.37 | 0.47 | 0.15 | 0.09 | 0.04 | 0.03 | 0.14 | 7.3 | 0 | 0.72 | 0 | 19.8 |
| H | 0.008 | 0.84 | 1.19 | 0.016 | 9.37 | 16.84 | 0.010 | 0.37 | 0.51 | 0.19 | 0.15 | 0.09 | 0.04 | 0.03 | 0.14 | 6.6 | 0 | 0.71 | 0 | 20.2 |
| I | 0.008 | 0.84 | 1.19 | 0.016 | 9.28 | 16.84 | 0.010 | 0.37 | 0.51 | 0.19 | 0.25 | 0.09 | 0.04 | 0.03 | 0.14 | 6.6 | 0 | 0.71 | 0 | 20.1 |
| J | 0.008 | 0.84 | 1.19 | 0.017 | 7.57 | 16.84 | 0.010 | 0.37 | 0.88 | 0.47 | 0.15 | 0.09 | 0.04 | 0.03 | 0 | 7.3 | 0 | 0.71 | 0.02 | 18.4 |
| K | 0.008 | 0.84 | 1.19 | 0.016 | 8.47 | 16.84 | 0.010 | 0.37 | 0.88 | 0.47 | 0.15 | 0.09 | 0.04 | 0.03 | 0 | 7.3 | 0 | 0.71 | 0.02 | 19.3 |
| L | 0.008 | 0.84 | 1.19 | 0.016 | 9.37 | 14.76 | 0.010 | 0.37 | 0.88 | 0.47 | 0.15 | 0.09 | 0.04 | 0.03 | 0 | 7.3 | 0 | 0.71 | 0.02 | 19.2 |
| M | 0.008 | 0.84 | 1.19 | 0.016 | 9.37 | 15.79 | 0.010 | 0.37 | 0.88 | 0.47 | 0.15 | 0.09 | 0.04 | 0.03 | 0 | 7.3 | 0 | 0.71 | 0.02 | 19.7 |
| N | 0.008 | 0.84 | 0.75 | 0.016 | 9.37 | 16.84 | 0.010 | 0.37 | 0.88 | 0.47 | 0.15 | 0.09 | 0.04 | 0.03 | 0 | 7.3 | 0 | 0.71 | 0.02 | 19.5 |
| O | 0.007 | 0.55 | 1.40 | 0.016 | 9.37 | 16.20 | 0.013 | 1.12 | 0 | 0.06 | 0.05 | 0.09 | 0.04 | 0.03 | 0.12 | 8.9 | 0 | 0.59 | 0 | 20.1 |
| P | 0.007 | 0.55 | 1.40 | 0.016 | 9.37 | 16.20 | 0.013 | 1.12 | 0 | 0.06 | 0.05 | 0.09 | 0.04 | 0.03 | 0.12 | 8.9 | 0 | 0.59 | 0 | 20.1 |
| Q | 0.007 | 0.55 | 1.40 | 0.016 | 9.37 | 16.20 | 0.013 | 1.12 | 0 | 0.06 | 0.05 | 0.09 | 0.04 | 0.03 | 0.12 | 8.9 | 0 | 0.59 | 0 | 20.1 |
| R | 0.007 | 0.55 | 1.40 | 0.016 | 9.37 | 16.20 | 0.013 | 1.12 | 1.52 | 0.06 | 0.05 | 0.09 | 0.04 | 0.03 | 0.12 | 8.9 | 0 | 0.59 | 0 | 20.1 |
| Comparative Example S | 0.007 | 0.55 | 1.40 | 0.016 | 9.37 | 16.20 | 0,014 | 0.46 | 0.62 | 0.06 | 0.05 | 0.09 | 0.04 | 0.03 | 0.12 | 8.9 | 0 | 0.59 | 0 | 20.1 |
| T | 0.008 | 0.55 | 1.39 | 0.016 | 9.37 | 20.35 | 0.013 | 1.12 | 1.52 | 0.06 | 0.05 | 0.09 | 0.04 | 0.03 | 0.12 | 8.9 | 0 | 0.59 | 0 | 22.2 |
| U | 0.007 | 0.67 | 3.02 | 0.016 | 9.37 | 16.23 | 0.120 | 1.12 | 1.52 | 0.06 | 0.05 | 0.09 | 0.04 | 0.03 | 0.12 | 8.9 | 0 | 0.59 | 0 | 22.8 |
| V | 0.006 | 0.31 | 2.49 | 0.017 | 8.81 | 18.94 | 0.013 | 0 | 0 | 0 | 0 | 0 | 0.02 | 0.03 | 0 | 0 | 0 | 0.05 | 6.9 | 22.5 |
| W | 0.007 | 0.84 | 0.76 | 0.017 | 7.57 | 14.76 | 0.010 | 0.37 | 0.88 | 0.47 | 0.15 | 0.09 | 0.04 | 0.03 | 0 | 7.3 | 0 | 0.71 | 0.02 | 16.7 |

*Other components: Si oxide, Al oxide, Ti oxide, Zr oxide, etc.

[Evaluation of Wire]

Gas shielded arc welding was performed using the produced flux-cored wire to evaluate the cryogenic toughness of the weld metal.

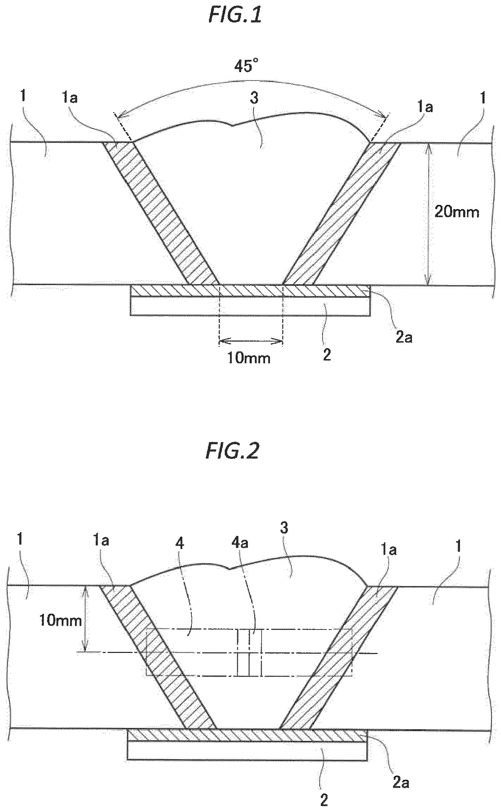

FIG. 1 is a schematic view showing a welding method in the present example. As shown in FIG. 1, two carbon steel sheets 1 having a sheet thickness of 20 mm were prepared and processed so as to have a groove angle of 45°, then two to three buttering layers 1a and 2a were formed on a surface of a groove portion and a surface of a backing material 2 by using the produced wire, and the carbon steel sheets 1 were disposed so as to be a V groove. Thereafter, welding was performed under the following welding conditions to form a weld metal 3 in the groove portion. The chemical composition of the carbon steel sheet 1 as the base metal is shown in Table 2 below.

(Welding Conditions)

Test steel sheet: carbon steel sheet SM490
Welding current: 200 A to 300 A
Welding voltage: 28 V to 30 V
Travel speed: 30 cm/min to 50 cm/min
Welding heat input: 7 kJ/cm to 16 kJ/cm
Contact chip distance: 15 mm to 20 mm
Power supply polarity: DC-EN or DC-EP
Welding position: downward
Shielding gas: 98 vol% Ar-2 vol% $O_2$, 90 vol% Ar-10 vol% $O_2$, 98 vol% Ar-2 vol% $CO_2$, 90 vol% Ar-10 vol% $CO_2$, 80 vol% Ar-20 vol% $CO_2$, 100 vol% $CO_2$

[Table 2]

| Chemical composition of carbon steel sheet (mass%) | | | | | |
|---|---|---|---|---|---|
| C | Si | Mn | P | s | Fe |
| 0.12 | 0.28 | 1.35 | 0.009 | 0.001 | Remainder |

(Charpy Impact Test)

A test piece was collected from the weld metal 3 obtained by the gas-shielded arc welding.

FIG. 2 is a schematic view showing a position at which a test piece is collected in a Charpy impact test. As shown in FIG. 2, a Charpy V-notch test piece 4 in which a V-notch was formed at a right angle to a weld line in accordance with JIS Z2242 was taken from a position at a depth of 10 mm from the surface of the steel sheet 1.

Thereafter, each test piece was subjected to a Charpy impact test at -196°C and 0°C to measure the absorbed energy vE (J), and the cryogenic toughness was evaluated. The test pieces were collected at three positions, and the average value thereof was calculated. It should be noted that those having a Charpy impact absorbed energy at 0°C ($vE_{0°C}$) of more than 80J and a Charpy impact absorbed energy at -196°C ($vE_{-196°C}$) of more than 36J were evaluated as excellent in the cryogenic toughness.

Further, chips were collected from a central portion of the produced weld metal 3, and the chemical composition was analyzed.

The chemical composition of the weld metal in each test piece is shown in Table 3 below, and the welding conditions and the measurement results of the absorbed energy by the Charpy impact test are shown in Table 4 below. In Table 3 below, "0" indicates that the component is not intentionally added at the time of wire production and welding, or is less than or equal to a detection limit, and in Table 3 and Table 4 below,"-" indicates that analysis or measurement is not performed.

[Table 3]

| | Test pieces No. | Wire No. | Chemical composition of weld metal (mass%, remainder being Fe and inevitable inpurities) | | | | | | | | | | | | | $X_2$ calculated by formula (2) | $X_3$ calculated by formula (3) |
|---|---|---|---|---|---|---|---|---|---|---|---|---|---|---|---|---|---|
| | | | C | Si | Mn | P | Ni | Cr | N | O | Al | Mg | REM | Ca | Zr | | |
| Invention Example | 1 | A | 0.023 | 0.74 | 1.51 | 0.017 | 10.28 | 18.40 | 0.019 | 0.007 | 0.19 | - | - | - | - | 22.6 | 0.042 |
| | 2 | B | 0.018 | 0.75 | 1.49 | 0.017 | 10.22 | 18.39 | 0.019 | 0.010 | 0.20 | - | - | - | - | 22.4 | 0.037 |
| | 3 | C | 0.037 | 0.64 | 1.50 | 0.019 | 8.27 | 18.65 | 0.013 | 0.021 | 0 | - | - | - | - | 20.9 | 0.050 |
| | 4 | D | 0.040 | 0.63 | 1.49 | 0.018 | 9.31 | 18.62 | 0.014 | 0.019 | 0 | - | - | - | - | 21.9 | 0.054 |
| | 5 | E | 0.037 | 0.61 | 1.47 | 0.019 | 10.34 | 16.20 | 0.014 | 0.020 | 0 | - | - | - | - | 21.7 | 0.051 |
| | 6 | F | 0.038 | 0.64 | 1.49 | 0.018 | 10.32 | 17.43 | 0.014 | 0.019 | 0 | - | - | - | - | 22.3 | 0.052 |
| | 7 | G | 0.038 | 0.63 | 1.02 | 0.018 | 10.34 | 18.61 | 0.014 | 0.019 | 0 | - | - | - | - | 22.2 | 0.052 |
| | 8 | H | 0.026 | 0.66 | 1.27 | 0.017 | 9.96 | 18.38 | 0.013 | 0.012 | 0.13 | 0.009 | 0.003 | 0.001 | 0.025 | 21.9 | 0.039 |
| | 9 | I | 0.029 | 0.79 | 1.29 | 0.017 | 10.04 | 18.26 | 0.013 | 0.006 | 0.25 | 0.011 | 0.016 | 0.001 | 0.044 | 22.1 | 0.042 |
| | 10 | J | 0.037 | 0.75 | 1.29 | 0.017 | 8.20 | 18.61 | 0.026 | 0.009 | 0.14 | - | - | - | - | 20.5 | 0.063 |
| | 11 | K | 0.037 | 0.73 | 1.25 | 0.017 | 8.92 | 18.01 | 0.032 | 0.007 | 0.15 | - | - | - | - | 20.8 | 0.069 |
| | 12 | L | 0.037 | 0.75 | 1.30 | 0.018 | 10.28 | 16.31 | 0.041 | 0.006 | 0.15 | - | - | - | - | 21.4 | 0.078 |
| | 13 | M | 0.041 | 0.78 | 1.28 | 0.017 | 10.02 | 17.28 | 0.014 | 0.007 | 0.21 | - | - | - | - | 21.7 | 0.055 |
| | 14 | N | 0.040 | 0.79 | 0.87 | 0.017 | 10.02 | 18.48 | 0.013 | 0.006 | 0.22 | - | - | - | - | 21.6 | 0.053 |
| Comparative Example | 15 | O | 0.042 | 0.57 | 1.49 | 0.017 | 10.70 | 18.36 | 0.022 | 0.009 | 0.45 | - | - | - | - | 23.2 | 0.064 |
| | 16 | P | 0.046 | 0.58 | 1.50 | 0.017 | 10.79 | 18.50 | 0.021 | 0.005 | 0.71 | - | - | - | - | 23.4 | 0.067 |
| | 17 | Q | 0.046 | 0.57 | 1.50 | 0.017 | 10.81 | 18.44 | 0.023 | 0.005 | 0.74 | - | - | - | - | 23.4 | 0.069 |
| | 18 | R | 0.046 | 0.56 | 1.55 | 0.018 | 11.06 | 18.75 | 0.023 | 0.008 | 0.43 | - | - | - | - | 23.9 | 0.069 |
| | 19 | S | 0.054 | 0.31 | 1,49 | 0.019 | 10.86 | 18.41 | 0.023 | 0.035 | 0.07 | - | - | - | - | 23.4 | 0.077 |
| | 20 | T | 0.061 | 0.52 | 1.53 | 0.018 | 11.03 | 23.48 | 0.026 | 0.012 | 0.29 | - | - | - | - | 26.4 | 0.087 |
| | 21 | U | 0.046 | 0.67 | 3.18 | 0.018 | 11.13 | 18.49 | 0.091 | 0.011 | 0.30 | - | - | - | - | 26.5 | 0.137 |
| | 22 | V | 0.023 | 0.74 | 1.53 | 0.018 | 9.62 | 19.47 | 0.016 | 0.140 | 0 | - | - | - | - | 22.5 | 0.039 |
| | 23 | W | 0.034 | 0.78 | 0.88 | 0.018 | 8.10 | 16.23 | 0.013 | 0.008 | 0.20 | - | - | - | - | 18.5 | 0.047 |

[Table 4]

| | Test piece No. | Wire No. | Welding conditions | | Absorbed energy | |
|---|---|---|---|---|---|---|
| | | | Power supply polarity | Shielding gas | $vE_{0°C}$ (J) | $vE_{-196°C}$ (J) |
| Invention Example | 1 | A | DC-EN | 90%Ar-10%$O_2$ | 173 | 113 |
| | 2 | B | DC-EN | 90%Ar-10%$O_2$ | 197 | 125 |
| | 3 | C | DC-EN | 98%Ar-2%$O_2$ | 121 | 62 |
| | 4 | D | DC-EN | 98%Ar-2%$O_2$ | 109 | 58 |
| | 5 | E | DC-EN | 98%Ar-2%$O_2$ | 128 | 75 |
| | 6 | F | DC-EN | 98%Ar-2%$O_2$ | 118 | 68 |
| | 7 | G | DC-EN | 98%Ar-2%$O_2$ | 120 | 64 |
| | 8 | H | DC-EN | 90%At-10%$O_2$ | - | 86 |
| | 9 | I | DC-EN | 98%Ar-2%$CO_2$ | - | 83 |
| | 10 | J | DC-EN | 98%Ar-2%$O_2$ | 171 | 46 |
| | 11 | K | DC-EN | 98%Ar-2%$O_2$ | 160 | 36 |
| | 12 | L | DC-EN | 98%Ar-2%$O_2$ | 167 | 55 |
| | 13 | M | DC-EN | 98%Ar-2%$O_2$ | 108 | 41 |
| | 14 | N | DC-EN | 98%Ar-2%$O_2$ | 111 | 38 |
| Comparative Example | 15 | O | DC-EN | 100%$CO_2$ | 134 | 30 |
| | 16 | P | DC-EN | 80%Ar-20%$CO_2$ | 135 | 24 |
| | 17 | Q | DC-EN | 90%Ar-10%$CO_2$ | 135 | 32 |
| | 18 | R | DC-EN | 100%$CO_2$ | 138 | 25 |
| | 19 | S | DC-EN | 100%$CO_2$ | 97 | 29 |
| | 20 | T | DC-EN | 100%$CO_2$ | 130 | 28 |
| | 21 | U | DC-EN | 100%$CO_2$ | 158 | 32 |
| | 22 | V | DC-EP | 100%$CO_2$ | 46 | - |
| | 23 | W | DC-EN | 98%Ar-2%$O_2$ | 111 | 35 |

As shown in Table 1, Table 3, and Table 4 above, in the wire Nos. A to N of the invention examples, the content of the wire component per total mass of the wire and $X_1$ calculated by the above formula (1) were within the numerical range specified in the present invention, and therefore, it was possible to obtain a weld metal having the excellent cryogenic toughness.

In the test pieces No. 1 to No. 14 of the weld metal of the invention examples, since the content of the weld metal component per total mass of the weld metal and $X_2$ calculated by the above formula (2) were within the numerical range specified in the present invention, the Charpy impact absorbed energy ($vE_{-196°C}$) at -196°C was 36J or more, and the cryogenic toughness was excellent.

Further, since the welding method specified in the present invention was used for the test pieces No. 1 to No. 14, the excellent weldability could be obtained.

In addition, in the wires Nos. A to I, at least a part of Al, Mg, REM, Ca, and Zr was further added to the wire, and since these contents were within the numerical range specified as the preferred condition of the present invention, the excellent cryogenic toughness could be obtained by the deoxidizing effect. Further, in the test pieces No. 8 and No. 9 of the weld metal, since the contents of Al, Mg, REM, Ca, and Zr were within the numerical range specified as the preferred condition of the present invention, the excellent cryogenic toughness could be obtained.

In the test pieces Nos. 1 to 7 and 10 to 14 of the weld metal, the contents of Mg, REM, Ca, and Zr were not measured, and these elements were not contained in the carbon steel sheet as the welding base metal, so that from the components contained in the wire, it is presumed that Mg, REM, Ca, and Zr in the weld metal are also within the numerical range specified as the preferred condition of the present invention.

In addition, in the test pieces No. 8 and No. 9 of the weld metal, the Charpy impact absorbed energy ($vE_{0°C}$) at 0°C was not measured, but the Charpy impact absorbed energy ($vE_{-196°C}$) at -196°C exhibited an excellent value, and thus it is presumed that the Charpy impact absorbed energy ($vE_{0°C}$) at 0°C exhibited an excellent value even at 0°C.

Subsequently, among the inventive examples, in the wires Nos. A to I, since $Li_2O$ was added to the wire within the numerical range specified as the preferred condition of the present invention, that is, in an amount of 0.13 mass% or more, the content of N in the weld metal was reduced. Therefore, in the test pieces Nos. 1 to 9 of the weld metal, since the content of Mn in the weld metal was 0.90 mass% or more and $X_3$ calculated by the formula (3) satisfied the numerical value range specified as the preferred condition of the present invention, that is, 0.054 or less, the Charpy impact absorbed energy ($vE_{-196°C}$) at -196°C exceeded 57J, and more excellent cryogenic toughness could be obtained.

In the test pieces No. 10 to No. 13 of the weld metal among the inventive examples, $X_3$ was more than 0.054, and in the test piece No. 14 of the weld metal, the content of Mn in the weld metal was less than 0.90 mass%, so that $vE_{-196°C}$ had a value of 57J or less.

Further, in the wire Nos. A to I, at least a part of Na, F, $Li_2O$, $BaF_2$, $SrF2$, and $Fe_2O_3$ was further added to the wire, but each content thereof was within a numerical value range specified as a preferred condition of the present invention, and thus the weldability was good.

On the other hand, in the wires No. O to S as comparative examples, since the content of Si per total mass of the wire was less than the lower limit of the range of the present invention, a weld metal having excellent cryogenic toughness could not be obtained.

In the wires No. T and No. V, since the content of Si per total mass of the wire was less than the lower limit of the range of the present invention and $X_1$ calculated by the formula (1) exceeded the upper limit of the range of the present invention, a weld metal having excellent cryogenic toughness could not be obtained.

In the wire No. U, the content of Mn and the content of N per total mass of the wire, and $X_1$ calculated by the formula (1) exceeded the upper limit of the range of the present invention, and thus a weld metal having excellent cryogenic toughness could not be obtained.

In the wire No. W, since $X_1$ calculated by the formula (1) was less than the lower limit of the range of the present invention, a weld metal having excellent cryogenic toughness could not be obtained.

Note that although the Charpy impact absorbed energy ($vE_{-196°C}$) at -196°C was not measured for the test piece No. 22 of the weld metal, the Charpy impact absorbed energy ($vE_{0°C}$) at 0°C showed an extremely low value, and thus it is presumed that the Charpy impact absorbed energy ($vE_{-196°C}$) at -196°C showed a lower value.

In addition, in the test pieces Nos. 15 to 18 and No. 20 of the weld metal, the content of Si per total mass of the weld metal was less than the lower limit of the range of the present invention, and $X_2$ calculated by the formula (2) exceeded the upper limit of the range of the present invention, so that the weld metal having excellent cryogenic toughness could not be obtained.

In the test piece No. 19 of the weld metal, the content of Si per total mass of the weld metal was less than the lower limit of the range of the present invention, and the content of O per total mass of the weld metal and $X_2$ calculated by the formula (2) exceeded the upper limit of the range of the present invention, so that a weld metal having excellent cryogenic toughness could not be obtained.

In the test piece No. 21 of the weld metal, since the content of Mn and the content of N per total mass of the weld metal, and $X_2$ calculated by the formula (2) exceeded the upper limit of the range of the present invention, a weld metal having excellent cryogenic toughness could not be obtained.

In the test piece No. 22 of the weld metal, since the content of O per total mass of the weld metal exceeded the upper limit of the range of the present invention, a weld metal having excellent cryogenic toughness could not be obtained.

In the test piece No. 23 of the weld metal, since $X_2$ calculated by the formula (2) was less than the lower limit of the range of the present invention, a weld metal having excellent cryogenic toughness could not be obtained.

Although the embodiments are described above with reference to the drawings, it is needless to say that the present invention is not limited to such examples. It will be apparent to those skilled in the art that various changes and modifications may be conceived within the scope of the claims. It is also understood that the various changes and modifications belong to the technical scope of the present invention. Constituent elements in the embodiments described above may be combined freely within a range not departing from the spirit of the present invention.

The present application is based on Japanese Patent Application No. 2019-123039 filed on July 1, 2019, and Japanese Patent Application No. 2020-005418 filed on January 16, 2020, the contents of which are incorporated herein by reference.

REFERENCE SIGNS LIST

1          Carbon steel sheet
1a, 2a   Buttering layer
2          Backing material
3          Weld metal
4          Test piece

**Claims**

1.  An austenitic stainless steel flux-cored wire which is a flux-cored wire in which a steel sheath is filled with a flux, the austenitic stainless steel flux-cored wire containing, per total mass of a wire,

    C: 0.018 mass% or less;
    Si: 0.57 mass% or more and 1.00 mass% or less;
    Mn: 0.70 mass% or more and 3.00 mass% or less;
    P: 0.021 mass% or less;
    Ni: 7.00 mass% or more and 13.00 mass% or less;
    Cr: 12.00 mass% or more and 21.00 mass% or less;
    N: 0.030 mass% or less,
    with a remainder being Fe and inevitable impurities, wherein
    $X_1$ calculated by the following formula (1) is 17.5 or more and 22.0 or less,

    $$X_1 = [Ni]_w + 0.5 \times [Cr]_w + 1.6 \times [Mn]_w + 0.5 \times [Si]_w + 15 \times [C]_w \dots (1)$$

    wherein in the formula (1), $[Ni]_w$, $[Cr]_w$, $[Mn]_w$, $[Si]_w$, and $[C]_w$ each represent the content (mass%) of Ni, Cr, Mn, Si, and C in the wire per the total mass of the wire.

2.  The austenitic stainless steel flux-cored wire according to claim 1, further containing, per the total mass of the wire, $Li_2O$: 0.13 mass% or more.

3.  The austenitic stainless steel flux-cored wire according to claim 1 or 2, further containing, per the total mass of the wire, at least one selected from (a) to (d):

    (a) at least one of

        Al: 2.00 mass% or less,
        Mg: 2.00 mass% or less,
        REM: 0.70 mass% or less,
        Ca: 0.50 mass% or less, and
        Zr: 0.40 mass% or less;

    (b) at least one of

        one or both of Na and K in total: 0.60 mass% or less,
        F: 0.50 mass% or less,
        $Li_2O$: 0.50 mass% or less,
        $BaF_2$: 10.0 mass% or less,
        $SrF_2$: 10.0 mass% or less,
        $CaF_2$: 10.0 mass% or less, and
        $Fe_2O_3$: 2.00 mass% or less;

    (c) at least one of

Cu: 1.0 mass% or less,
Mo: 1.0 mass% or less,
W: 1.0 mass% or less,
Ti: 0.5 mass% or less, and
B: 0.01 mass% or less; and

(d) at least one selected from the group consisting of Si oxide, Al oxide, Ti oxide, and Zr oxide in total: more than 0 mass% and 5 mass% or less.

4.  A weld metal containing, per total mass of the weld metal,

C: 0.065 mass% or less;
Si: 0.59 mass% or more and 1.00 mass% or less;
Mn: 0.80 mass% or more and 3.00 mass% or less;
P: 0.025 mass% or less;
Ni: 8.00 mass% or more and 15.00 mass% or less;
Cr: 15.00 mass% or more and 24.00 mass% or less;
N: 0.080 mass% or less;
O: 0.030 mass% or less,
with a remainder being Fe and inevitable impurities, wherein
$X_2$ calculated by the following formula (2) is 18.8 or more and 23.0 or less,

$$X_2 = [Ni]_M + 0.5 \times [Cr]_M + 1.6 \times [Mn]_M + 0.5 \times [Si]_M + 15 \times [C]_M \ldots (2)$$

wherein in the formula (2), $[Ni]_M$, $[Cr]_M$, $[Mn]_M$, $[Si]_M$, and $[C]_M$ each represent the content (mass%) of Ni, Cr, Mn, Si, and C in the weld metal per the total mass of the weld metal.

5.  The weld metal according to claim 4, wherein the content of Mn per total mass of the weld metal is 0.90 mass% or more, and $X_3$ calculated by the following formula (3) is 0.054 or less,

$$X_3 = [C]_M + [N]_M \ldots (3)$$

wherein in the formula (3), $[C]_M$ and $[N]_M$ each represent the content (mass%) of C and N in the weld metal per the total mass of the weld metal.

6.  The weld metal according to claim 4 or 5, further containing, per the total mass of the weld metal, at least one selected from (e) and (f):

(e) at least one of

Al: 0.80 mass% or less,
Mg: 0.040 mass% or less,
REM: 0.080 mass% or less,
Ca: 0.005 mass% or less, and
Zr: 0.100 mass% or less; and

(f) at least one of

Cu: 1.0 mass% or less,
Mo: 1.0 mass% or less,
W: 1.0 mass% or less,
Ti: 0.5 mass% or less, and
B: 0.01 mass% or less.

7.  A welding method comprising:
performing welding by

using the austenitic stainless steel flux-cored wire according to claim 1 or 2, and using, as a shielding gas, one selected from:

100 vol% Ar gas;
Ar-$O_2$ mixed gas containing 20 vol% or less of $O_2$ gas; and
Ar-$CO_2$ mixed gas containing 5 vol% or less of $CO_2$.

FIG.1

FIG.2

**INTERNATIONAL SEARCH REPORT**

| International application No. |
| --- |
| PCT/JP2020/024814 |

A. CLASSIFICATION OF SUBJECT MATTER
Int.Cl. B23K35/368(2006.01)i, B23K9/16(2006.01)i, B23K9/23(2006.01)i,
B23K35/30(2006.01)i, C22C38/00(2006.01)n, C22C38/04(2006.01)n
FI: B23K35/368B, B23K35/30320C, B23K9/16J, B23K9/23J, B23K35/30320B,
C22C38/00301A, C22C38/04
According to International Patent Classification (IPC) or to both national classification and IPC

B. FIELDS SEARCHED

Minimum documentation searched (classification system followed by classification symbols)
Int.Cl. B23K35/368, B23K9/16, B23K9/23, B23K35/30, C22C38/00, C22C38/04

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2018-89678 A (NIPPON STEEL AND SUMIKIN WELDING) 14.06.2018 (2018-06-14) | 1-7 |
| A | JP 56-53897 A (NIPPON STEEL CORPORATION) 13.05.1981 (1981-05-13) | 4-6 |
| A | JP 2019-887 A (NIPPON STEEL AND SUMIKIN WELDING) 10.01.2019 (2019-01-10) | 1-7 |
| A | JP 2012-55899 A (KOBE STEEL, LTD.) 22.03.2012 (2012-03-22) | 4-6 |

☐ Further documents are listed in the continuation of Box C.    ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 11.09.2020 | 24.09.2020 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT<br>Information on patent family members | International application No.<br>PCT/JP2020/024814 |
|---|---|

| JP 2018-89678 A | 14.06.2018 | (Family: none) |
|---|---|---|
| JP 56-53897 A | 13.05.1981 | (Family: none) |
| JP 2019-887 A | 10.01.2019 | KR 10-2018-0138140 A |
| JP 2012-55899 A | 22.03.2012 | US 2012/0055903 A1<br>KR 10-1289964 B1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6690 A
- JP 2002001580 A
- JP 2019000887 A
- JP 2019123039 A
- JP 2020005418 A